# EUROPEAN PATENT APPLICATION

(11) **EP 1 249 677 A2**
(43) Date of publication of application: **16.10.2002**
(21) Application number: 02007910.9
(22) Date of filing: 09.04.2002
(51) Int. Cl.: F28F 9/26, F28D 1/053

(54) **A radiator for an installation of centralized heating**

(30) Priority: 12.04.2001 IT VI010081
(71) Applicant: Talin S.R.L., I-35014 Fontaniva (Padova) (IT); Dori, Francesco, London W12 8DN (GB)
(72) Inventor: Talin, Mario, 35014 Fontaniva (Padova) (IT); Dori, Francesco, London W12 8DN (GB)
(74) Representative: Bettello, Pietro, Dott. Ing.

(57) **Abstract**

A radiator for an installation of centralized heating comprises comprises a plurality of tubular elements (1) and (2), reciprocally connected. The radiator is inserted in a hydraulic circuit in which flows a liquid warmed by a boiler and put in circulation in a natural or forced manner.

This liquid gives heat to the exterior by means of the lateral surface of the tubular elements. The radiator is characterized by the fact that the tubular elements (1) and (2) are fixed one to the other by means of elements (3) which have a screw. These elements (3) are provided with hydraulic means whereby the discharge of the liquid from the tubular elements is avoided.

## Description

### FIELD OF THE INVENTION

This invention relates to a radiator for an installation of centralized heating.

### BACKGROUND OF THE PRIOR ART

It is known that the radiators of this type comprise a plurality of tubular elements which are connected one to the other and which are inserted in a hydraulic circuit in which a liquid flows. This liquid is warmed by means of a boiler and is placed in circulation in a natural manner or in the greater part of the cases in a forced manner by means of a suitable circulation pump. This liquid gives warmth to the exterior by means of the lateral surface of the tubular elements. These elements are made separately one from the other and are fixed one to the other by welding. The radiator is then painted or chromium plated due clearly to reasons of aesthetic point of view.

In every case, the fact that the elements which compose the radiator must be welded one to the other, causes definite limits to the possibility of making radiators of particular shape.

In actual practice, it would be desirable both from a functional and aesthetic point of view to make radiators in which the tubular elements are fixed one to the other without using weldings which are difficult to use and antiaesthetic. However, this does not turn out to be simple or convenient so that the manufacturers for a long time have put on the market radiators which substantially have the same shape apart from small constructive variations.

### SUMMARY OF THE INVENTION

The object of the invention is to provide a radiator for the installation of centralized heating of the type described hereinabove but which is free of the drawbacks described hereinabove and capable potentially of having any conformation.

This is achieved according to the invention by providing the fact that the tubular elements are fixed together by means of elements with a screw equipped with hydraulic means . These elements with a screw are capable of avoiding the discharge of the liquid which is introduced in the radiator. These hydraulic means being placed corresponding to the areas in which the elements with a screw engage or come out from the tubular elements of the radiator, prevent the discharge of the liquid. In this manner it is possible to achieve typologies of radiators which would be impossible to obtain or would be very hard to achieve by means of a union one to the other by means of welding the tubular elements.

### BRIEF DESCRIPTION OF THE DRAWINGS

These and other characteristics of the invention will be described in detail hereinbelow by reference to particular embodiments provided as non-limiting examples by reference to the accompanying drawings, of which:
- Figs 1 and 2: show two views of a first embodiment of the invention;
- Figs 3 and 4: show two views in cross-section of the first embodiment, according to lines III-III and IV-IV of Fig. 1 of the first embodiment;
- Fig. 5: shows an enlarged view of the particular V of Fig. 2;

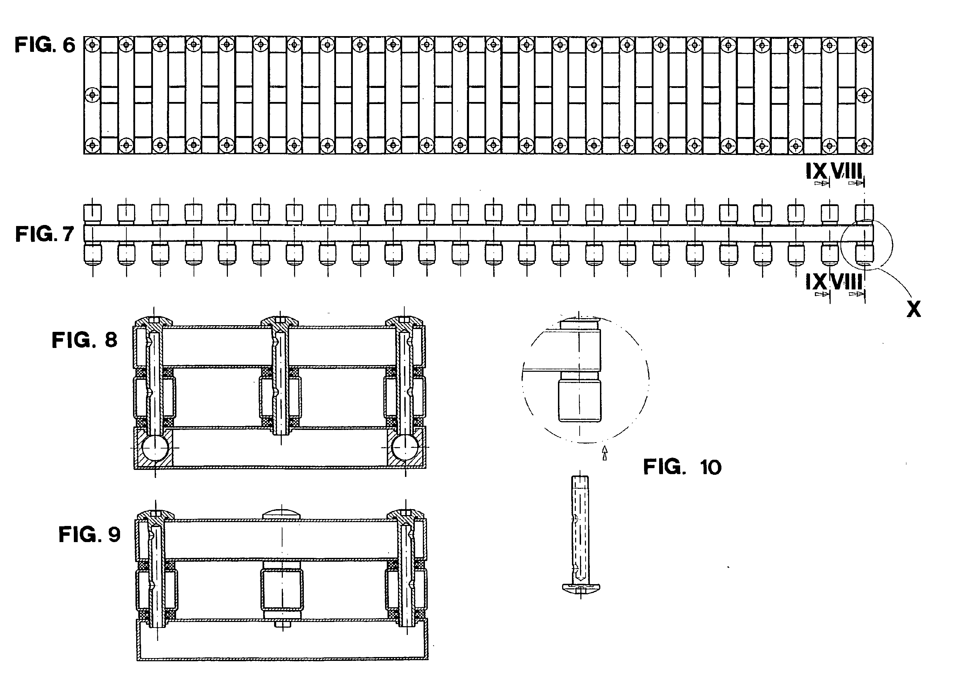

- Figs. 6 and 7: show two views of a second embodiment of the apparatus of the invention;
- Figs. 8 and 9: show two views in cross-section of the second embodiment, according to lines VIII-VIII and IX-IX of Fig. 7;
- Fig. 10: shows an enlarged view of the particular X of Fig. 7;
- Figs. 11 and 12: show two views of a third embodiment of the apparatus of the invention;
- Figs. 13 and 14: show two views in cross-section of the third embodiment, according to lines XIII-XIII and XIV-XIV of Fig. 11;
- Fig. 15 shows: an element used in this third embodiment of the invention;

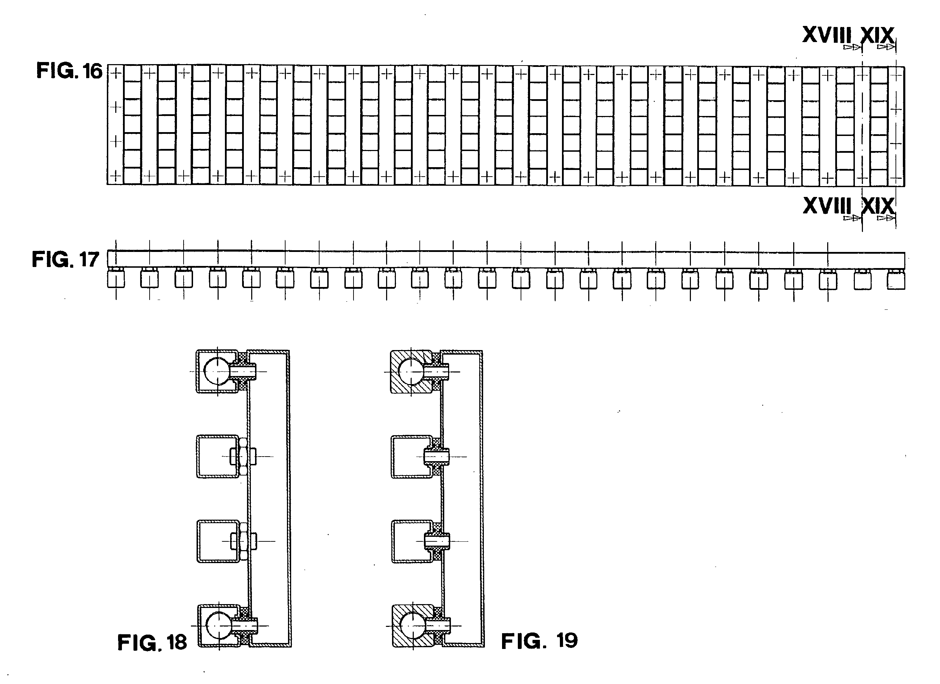

- Figs. 16 and 17: show two views of a fourth embodiment of the apparatus of the invention;
- Figs. 18 and 19: show two views in cross-section according to lines XVIII-XVIII and XIX-XIX of Fig. 16;
- Figs. 20, 21 and 21BIS: show three views of a fifth embodiment of the apparatus of the invention;
- Figs. 22 and 23: show two views in cross-section of the fifth embodiment by reference to the particulars XXII and XXIII of Fig. 21;
- Figs. 24 and 25: show respectively one view in the same scale as Fig. 21 and another an enlarged view of a particular present in the apparatus;
- Fig. 26: shows a view in cross-section of a possible current form of the apparatus of the invention;
- Figs. 27 and 28: show two views of an element with screw used in the above apparatus;
- Fig. 29: shows a view of another current form of the apparatus of the invention;
- Figs. 30 and 31: show two views of an element used in the above apparatus.

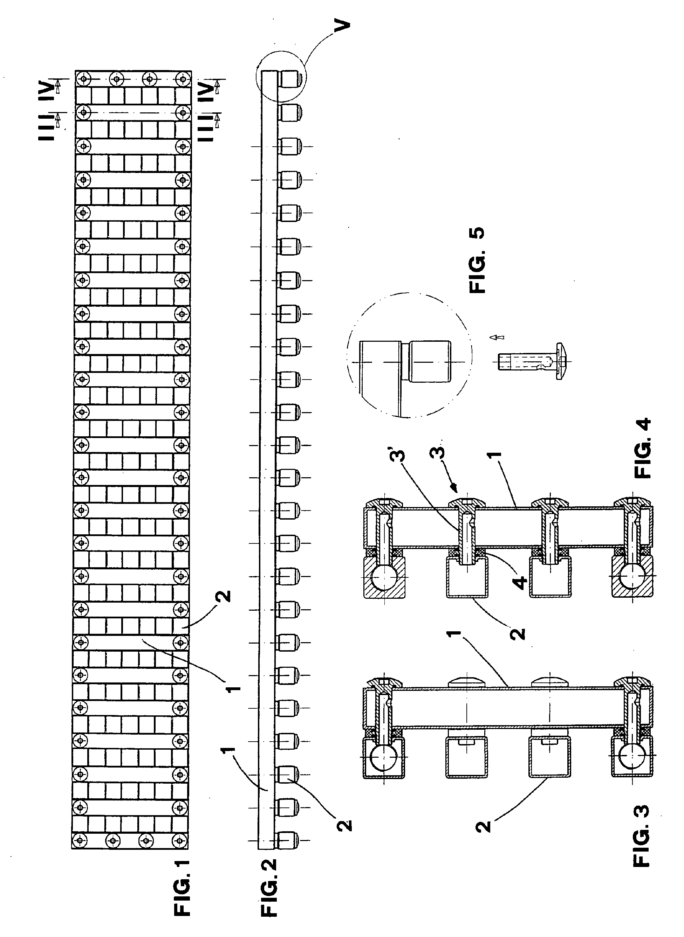

Figs. 1 and 2 show that the apparatus of the invention consists of a radiator for an installation of centralized heating, which comprises two rows of tubular elements (1) and (2), within which flows a warmed liquid coming from a boiler. These rows of tubular elements are disposed with respect to each other in a perpendicular manner causing in practice the formation of a reticulator in which, however, the sides which constitute the stitches lie on different planes, even when they are parallel and brought close.

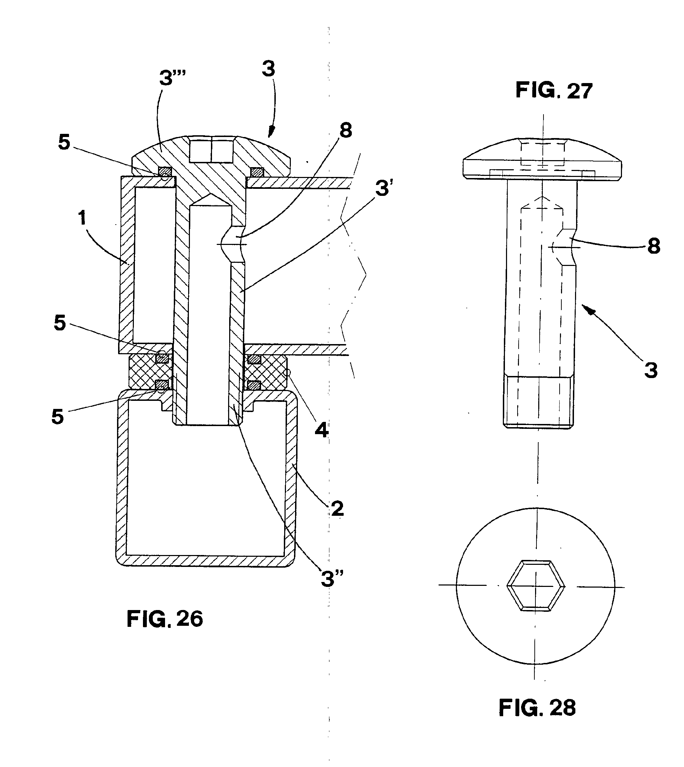

A fundamental characteristic of the apparatus of this invention is constituted by the fact that the reciprocal connection between the tubular elements (1) and (2) is ensured by the elements (3) with a screw (see Figs. 26, 27, 28) which have stem (3'). This stem is inserted in the interior of tubular elements (1) wich have a threaded end 3''. This end is inserted in a hole made in the tubular element (2). The screw goes through washer (4), placed between the two tubular elements (1) and (2). Both , corresponding to the area of head (3''') of the element with a screw placed in contact with tubular element (1) and areas in which the washer (4) is placed in contact with the two tubular elements (1) and (2), are present hydraulic means. These means are preferably constituted by rings (5) of the type ("O ring"), which obviously have the function of avoiding the discharge of fluid from tubular elements (1).

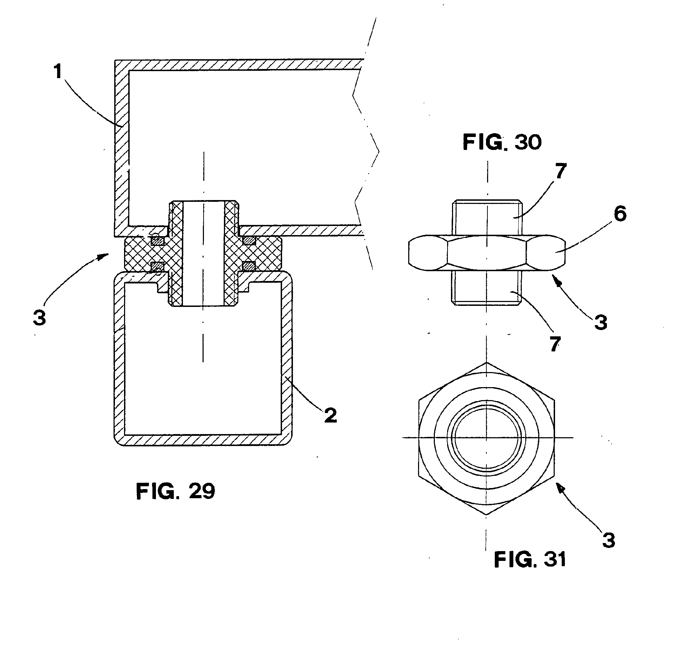

Figs. 29, 30 and 31 show that the element with a screw (3) may be constituted by a nut (6) which is provided with two extensions (7). These extensions have a cylindrical shape, are externally threaded and engage in threaded cavities present in tubular elements (1) and (2).

Going back to Fig. 26, the body (3') of screw 3 is internally hollow and communicates with the exterior by means of hole 8. Analogously screw (3) shown in Figs. 29, 30 and 31, is internally hollow and open at its ends.

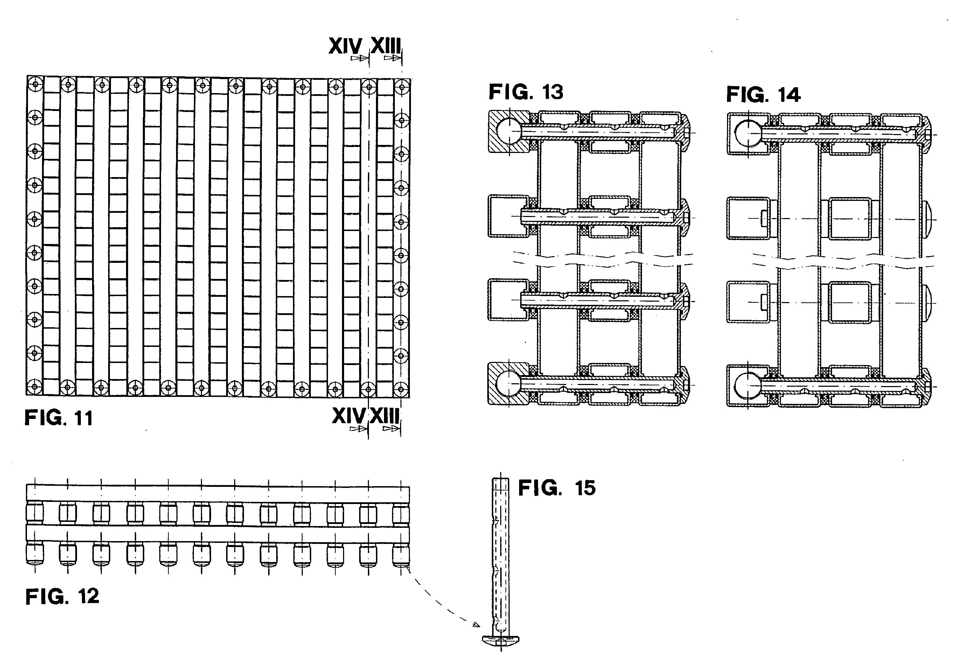

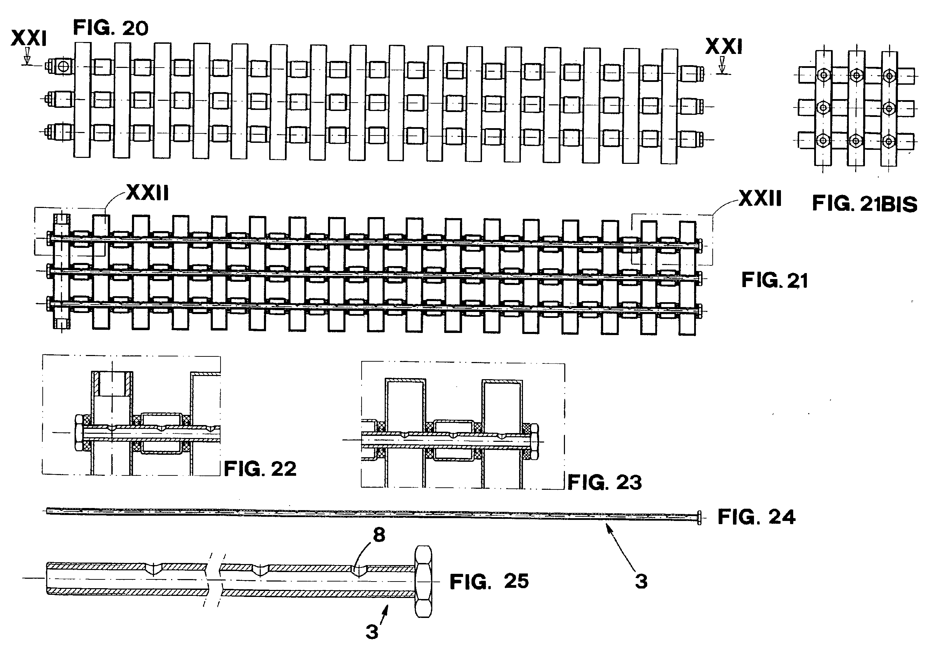

All the features mentioned hereinabove allow an easy downflow of the warming fluid from one tubular element to the other. In particular, Figs. 20 to 25 show that it is possible to use elements with a screw (3) which have a total length equal to the length of the entire radiator. In practice, this element with a screw is intended to go through all the tubular elements of the radiator, longitudinally or transversally; naturally the screw will be provided with a plurality of openings (8), reciprocally spaced and will be also internally hollow so as to allow free circulation of the fluid in the interior of the several elements which constitute the radiator. By studying the attached drawings it will be concluded that the apparatus of this invention allows to achieve a very great variety of constructive shapes of radiators for heating. In particular it is possible to achieve structures with a practically indefinite number of levels of tubular elements, see for instance Figs. 11 and 12.

Likewise it is possible to achieve very complex structures as the structures of Figs. 20 and 21 which would be particularly difficult or absolutely impossible to fabricate with the techniques of known type.

## Claims

1. A radiator for an installation of centralized heating, which comprises a plurality of tubular elements (1) and (2) connected one to the other, said radiator being inserted in a hydraulic circuit, a liquid warmed by a boiler and being put in circulation in a natural or forced manner flowing in said hydraulic circuit, said liquid giving heat to the exterior through the lateral surface of said tubular elements, said radiator being **characterized by** the fact that said tubular elements (1) and (2) are fixed one to the other by means of elements (3) which have a screw, said elements (3) being provided with hydraulic means (5) to avoid the discharge of the liquid from said tubular elements.

2. The radiator according to claim 1 **characterized by** the fact that said elements (3) are internally hollow whereby free circulation of the liquid between one and the other of the tubular elements (1) and (2) is allowed.

3. The radiator according to claim 1 or 2 **characterized by** the fact that elements (3) comprise a head (3''') and a stem (3'), said stem runs through at least one tubular element and fixes itself on another tubular element which is adjacent or non-adjacent to said first tubular element.

4. The radiator according to claim 3 **characterized by** the fact that between at least one tubular element (1) and the adjacent tubular element (2) is interposed a washer (4), which has a central hole, and said element (3) goes through said hole.

5. The radiator according to claim 1, 2 or 3, **characterized by** the fact that the stem (3') of at least one element (3) has a length equal to the radiator along the entire extension longitudinally or transversally.

6. The radiator according to claim 1 or 2 **characterized by** the fact that said element (3) comprises a central nut (6), said nut has two extensions (7), said extensions are externally threaded, and are engaged in a threaded cavity in said elements (1) and (2).
